# EUROPÄISCHE PATENTSCHRIFT

(11) **EP 1 572 482 B1**
(45) Veröffentlichungstag und Bekanntmachung des Hinweises auf die Patenterteilung: **24.09.2008**
(21) Anmeldenummer: 03782421.6
(22) Anmeldetag: 16.12.2003
(51) Int. Cl.: B60J 10/00, B60J 10/02, B60J 10/04, B60J 10/06

(54) **DICHTUNGSANORDNUNG, INSBESONDERE ZUM ABDICHTEN VON FENSTERSCHEIBEN EINES KRAFTFAHRZEUGS**
SEALING ARRANGEMENT, ESPECIALLY FOR SEALING WINDOW PANES OF A MOTOR VEHICLE
DISPOSITIF D' TANCH IT , NOTAMMENT POUR TANCHER LES GLACES D'UN V HICULE

(30) Priorität: 19.12.2002 DE 10259843
(43) Veröffentlichungstag der Anmeldung: 14.09.2005
(73) Patentinhaber: METZELER Automotive Profiles GmbH, D-88131 Lindau (DE)
(72) Erfinder: BROCKE, Rolf, 88239 Wangen (DE)
(74) Vertreter: Preissner, Nicolaus
(86) Internationale Anmeldenummer: PCT/EP2003/014341
(87) Internationale Veröffentlichungsnummer: WO 2004/056598

(56) Entgegenhaltungen:
- DE-A- 2 228 061
- GB-A- 2 024 906
- US-A- 3 742 649
- US-A- 4 291 076

## Beschreibung

Die Erfindung betrifft eine Dichtungsanordnung, die insbesondere zum Abdichten von Fensterscheiben eines Kraftfahrzeugs dient. Die Dichtungsanordnung ist mit einer Dichtung, die einen Dichtungsabschnitt und einen Befestigungsabschnitt aufweist, und einer Zierleiste, die formschlüssig mit dem Befestigungsabschnitt verbunden ist, versehen. Der Befestigungsabschnitt weist ein Haltesegment auf, das zum Befestigen der Zierleiste von einer ersten Stellung in eine zweite Stellung schwenkbar ist.

Eine Dichtungsanordnung zum Abdichten von Fensterscheiben eines Kraftfahrzeugs wird in der DE 34 26 355 A1 beschrieben. Die bekannte Dichtungsanordnung weist eine aus mehreren elastisch verformbaren Werkstoffen koextrudierte Dichtung auf, die an einem Flansch der Karosserie eines Kraftfahrzeugs befestigt ist. Die Dichtung ist an einer Außenfläche- formschlüssig mit einer Abdeckleiste verbunden. Zu diesem Zweck ist die Abdeckleiste mit einem Vorsprung versehen, der in einen Schlitz der Dichtung eingreift. Als Nachteil der bekannten Dichtungsanordnung hat sich eine vergleichsweise große Montagekraft erwiesen, die erforderlich ist, um den Vorsprung in den Schlitz zu drücken.

Weiterhin wird in der DE 197 36 899 C2 eine Dichtungsanordnung offenbart, die eine aus einem elastomeren Werkstoff bestehende Dichtung zum Abdichten einer Fensterscheibe eines Kraftfahrzeugs aufweist. Die Dichtung ist formschlüssig mit einer Zierleiste verbunden, die zu diesem Zweck mit einem vorsprungartigen Halteabschnitt versehen ist. Der Halteabschnitt wird bei der Befestigung der Dichtung an einem Flansch der Karosserie des Kraftfahrzeugs von einem Haltesegment eingeschlossen, das schwenkbeweglich an der Dichtung ausgebildet ist. Wenngleich durch die schwenkbewegliche Anordnung des Haltesegments ein wirksamer Formschluß zwischen Zierleiste und Dichtung erreicht wird, ohne daß eine verhältnismäßig große Montagekraft benötigt würde, ist die zuvor beschriebene Dichtungsanordnung mit dem Nachteil einer vergleichsweise voluminösen Ausgestaltung der Zierleiste verbunden. Dies ist auf den Halteabschnitt zurückzuführen, der nahezu orthogonal von der Zierleiste ragt.

Eine mit einer Zierleiste versehene Dichtung wird überdies in der DT 2 018 864 A und gattungsgemäßen US 3,742,649 beschrieben. Die Dichtung ist mit zwei nach außen gerichteten Halterippen versehen, die jeweils eine Einlegerille bilden. Die Einlegerillen dienen dazu, um mehr als 90° gebogene Ränder der Zierleiste aufzunehmen, welche die Zierleiste formschlüssig mit der Dichtung verbinden. Die Montage der Zierleiste findet derart statt, dass zunächst ein oberer Rand der Zierleiste in eine der Einlegerillen eingelegt wird und sodann ein im Wesentlichen S-förmiger unterer Rand der Zierleiste in die andere Einlegerille geschwenkt wird. Eine den unteren Rand im montierten Zustand formschlüssig umgreifende Rippe wird von einer ersten Stellung in eine den Formschluss bewirkende und damit dauerhaft eingenommene zweite Stellung schwenkbar.

Außerdem ist aus der DE 697 03 241 T2 eine Dichtung für den Fensterschacht einer Kraftfahrzeugtür bekannt, die an einer Außenfläche mit einer Zierleiste versehen ist. Die Zierleiste greift an einem oberen Ende in eine Aussparung der Dichtung ein und liegt an einem unteren Ende an einem verbreiterten Endabschnitt der Dichtung rastend an.

Der Erfindung liegt die **Aufgabe** zugrunde, eine Dichtungsanordnung der eingangs genannten Art dahingehend weiterzubilden, daß sich bei einer verhältnismäßig geringen Montagekraft eine flache Ausgestaltung der Zierleiste und eine zuverlässige Befestigung der Zierleiste an der Dichtung erzielen lassen.

Zur **Lösung** dieser Aufgabe ist bei einer Dichtungsanordnung mit den oben genannten Merkmalen in Übereinstimmung mit Anspruch 1 erfindungsgemäß vorgesehen, daß die Zierleiste an einem Ende mit einem ersten Hakenabschnitt und am anderen Ende mit einem zweiten Hakenabschnitt versehen ist. Der zweite Hakenabschnitt liegt formschlüssig an dem Haltesegment an, wohingegen der erste Hakenabschnitt an einer ersten Anlagefläche des Befestigungsabschnitts einrastet. Das Haltesegment ist zum Einrasten des ersten Hakenabschnitts an der ersten Anlagefläche entgegen der Wirkung einer Rückstellkraft von der ersten Stellung in die zweite Stellung schwenkbar.

Die erfindungsgemäße Dichtungsanordnung beruht auf der Erkenntnis, eine einfache und zuverlässige Befestigung der Zierleiste an der Dichtung durch das entgegen der Wirkung einer Rückstellkraft elastisch verformbare Haltesegment zu ermöglichen. Das bei der Montage der Zierleiste von der ersten Stellung in die zweite Stellung schwenkbare Haltesegment gewährleistet ein Einrasten des ersten Hakenabschnitts an der ersten Anlagefläche, das keiner großen Montagekraft bedarf. Auf Grund der dem Haltesegment immanenten Rückstellkraft kehrt im eingerasteten Zustand des ersten Hakenabschnitts das Haltesegment in die erste Stellung zurück und stellt somit einen wirksamen Formschluß zwischen den Hakenabschnitten der Zierleiste und der Dichtung sicher. Zugleich ergibt sich eine kraftschlüssige Verbindung von Zierleiste und Dichtung, die dazu beiträgt, Fertigungsungenauigkeiten auszugleichen. Die eine verhältnismäßig große Abzugskraft bewirkenden Hakenabschnitte gestatten zudem eine flache Ausgestaltung der Zierleiste. Denn von der Zierleiste ragende Halteabschnitte, wie im Stand der Technik üblich, werden durch die Hakenabschnitte entbehrlich.

Vorteilhafte Weiterbildungen der erfindungsgemäßen Dichtungsanordnung stellen die Gegenstände der Ansprüche 2 bis 10 dar.

Von Vorteil ist es, den Befestigungsabschnitt mit einer an das Haltesegment angrenzenden Ausnehmung zu versehen. Die Ausnehmung ermöglicht ein Schwenken des Haltesegments von der ersten Stellung in die zweite Stellung. Das Haltesegment kann somit innerhalb einer weitgehend geschlossenen Kontur des Befestigungsabschnitts angeordnet werden, so daß sich eine kompakte Bauweise ergibt.

Bevorzugt bildet das Haltesegment eine der Ausnehmung gegenüberliegende zweite Anlagefläche für die Zierleiste, um einen wirksamen Formschluß sicherzustellen. Die zweite Anlagefläche ist dabei zweckmäßigerweise gekrümmt ausgestaltet und vorzugsweise durch eine Ausnehmung des Befestigungsabschnitts gebildet. Eine gekrümmte Ausgestaltung der zweiten Anlagefläche trägt dazu bei, daß sich der zweite Hakenabschnitt und die zweite Anlagefläche verhaken und auf diese Weise einen zuverlässigen Formschluß hervorrufen. Die Bildung der zweiten Anlagefläche durch eine Ausnehmung des Befestigungsabschnitts trägt dazu bei, das Haltesegment in Hinsicht auf eine kompakte Ausgestaltung innerhalb einer geschlossenen Kontur des Befestigungsabschnitts anzuordnen.

Weiterhin ist es von Vorteil, die erste Anlagefläche durch eine Ausnehmung des Befestigungsabschnitts zu bilden, um der ersten Anlagefläche eine relativ hohe Widerstandsfähigkeit zu verleihen, die einen wirksamen Formschluß hervorruft.

In einer bevorzugten Ausgestaltung der erfindungsgemäßen Dichtungsanordnung ist der Befestigungsabschnitt mit wenigstens einer Stützlippe versehen, welche die Zierleiste abstützt. Die zweckmäßigerweise zwischen der ersten Anlagefläche und der zweiten Anlagefläche angeordnete Stützlippe erzeugt eine Spannkraft, welche die Hakenabschnitte der Zierleiste gegen die erste Anlagefläche und die zweite. Anlagefläche drückt. Der durch die Rückstellkraft des Haltesegments hervorgerufene Kraftschluß zwischen der Zierleiste und der Dichtung wird durch die Spannkraft erhöht, so daß einer verhältnismäßig großen Abzugskraft Rechnung getragen wird. Die Stützlippe gewährleistet zudem ein einfaches Einrasten der Hakenabschnitte der Zierleiste an den jeweiligen Anlageflächen der Dichtung, da die durch die Stützlippe erzeugte Spannkraft eine verhältnismäßig große Fertigungstoleranz erlaubt.

Vorteilhafterweise verfügt die erfindungsgemäße Dichtungsanordnung über ein Karosserieteil, an dem der Befestigungsabschnitt befestigt ist, wobei vorzugsweise der Befestigungsabschnitt im Querschnitt annähernd U-förmig ausgestaltet und auf einen Flansch des Karosserieteils aufgesteckt ist, um eine praxisgerechte Montage sicherzustellen.

Der Befestigungsabschnitt ist bevorzugt durch einen vorzugsweise metallenen Träger armiert. Der Träger gewährleistet eine ausreichende Steifigkeit des Befestigungsabschnitts und trägt somit zu einer zuverlässigen Befestigung bei.

Die Zierleiste ist zweckmäßigerweise aus Kunststoff oder Metall, vorzugsweise Aluminium, gefertigt. Vor allem die Ausgestaltung der Zierleiste aus Aluminium bietet neben einer leichtgewichtigen Ausgestaltung den Vorteil, daß sich eine in ästhetischer Hinsicht ansprechende optische Gestaltung erreichen läßt.

Um eine einfache und kostengünstige Fertigung zu erreichen, ist die Dichtung vorteilhafterweise aus einem elastisch verformbaren Werkstoff, vorzugsweise einem thermoplastischen Elastomer (TPE) oder Ethylen-Propylen-Dien-Kautschuk (EPDM), extrudiert. Die Fertigung der Dichtung durch Extrusion trägt der vor allem im Kraftfahrzeugbau anzutreffenden Massenproduktion Rechnung.

Einzelheiten und weitere Vorteile der erfindungsgemäßen Dichtungsanordnung ergeben sich aus der nachfolgenden Beschreibung bevorzugter Ausführungsbeispiele. In den die Ausführungsbeispiele lediglich schematisch darstellenden Zeichnungen veranschaulichen im einzelnen:
- Fig.1: eine Seitenansicht eines Kraftfahrzeugs;
- Fig. 2: einen Querschnitt gemäß der Linie II in Fig. 1 durch eine erste Ausführungsform der erfindungsgemäßen Dichtungsanordnung;
- Fig. 3: einen Querschnitt gemäß Fig. 2, der die Montage einer Zierleiste an einer Dichtung veranschaulicht;
- Fig. 4: einen Querschnitt durch eine zweite Ausführungsform der erfindungsgemäßen Dichtungsanordnung und
- Fig. 5: einen Querschnitt durch eine dritte Ausführungsform der erfindungsgemäßen Dichtungsanordnung.

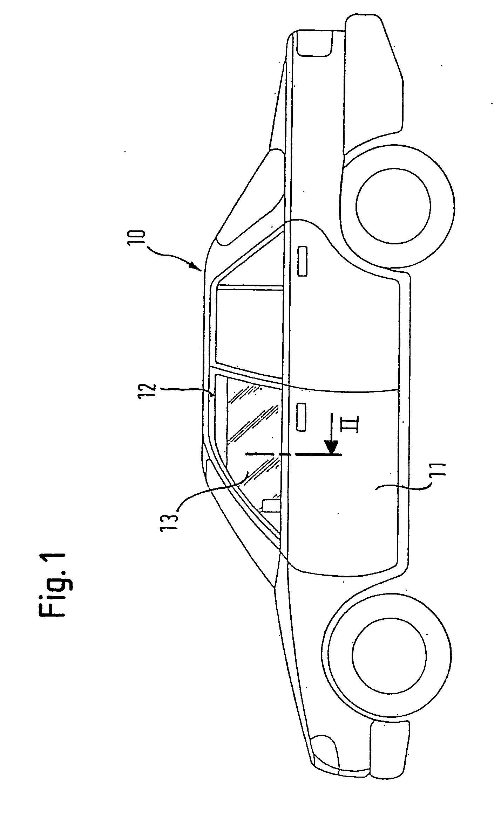

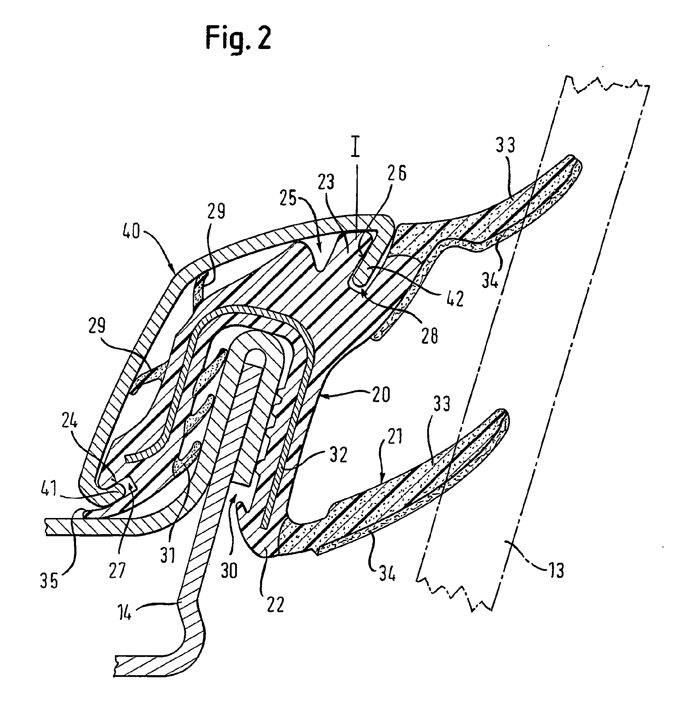

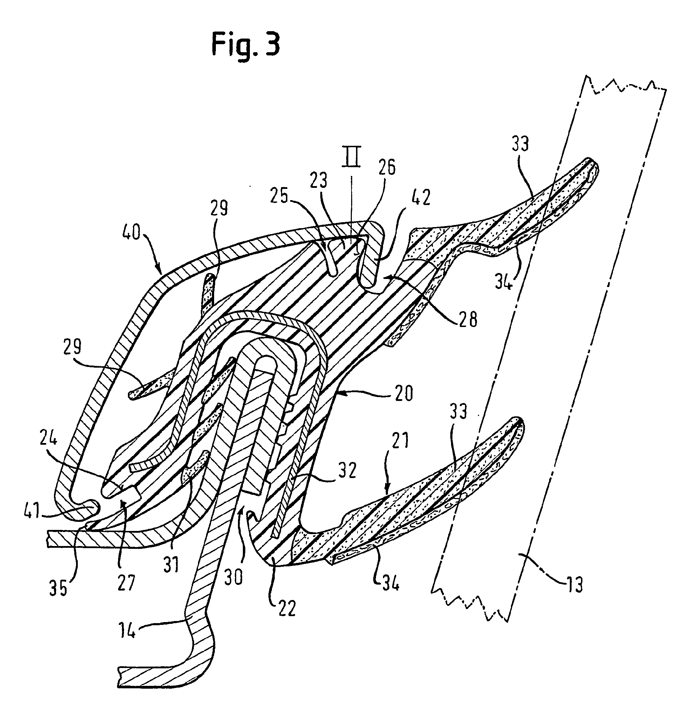

Das in Fig. 1 dargestellte Kraftfahrzeug 10 ist mit einer Tür 11 versehen, die einen Rahmen 12 aufweist. Innerhalb des Rahmens 12 ist eine Fensterscheibe 13 verfahrbar angeordnet. Die Fensterscheibe 13 wird durch eine Dichtung 20 abgedichtet, die einen Dichtungsabschnitt 21 und einen Befestigungsabschnitt 22 aufweist, wie die Fig. 2 und 3 erkennen lassen. Der Befestigungsabschnitt 22 ist an einem Flansch 14 der Tür 11 befestigt. Zu diesem Zweck weist der Befestigungsabschnitt 22 eine Ausnehmung 30 auf, die auf den Flansch 14 gesteckt ist. In der Ausnehmung 30 sind Haltelippen 31 angeordnet, die den Befestigungsabschnitt 22 zusätzlich kraftschlüssig mit dem Flansch 14 verbinden. Der Befestigungsabschnitt 22 ist ferner im Bereich der Ausnehmung 30 durch einen aus Kunststoff oder Metall bestehenden Träger 32 armiert. Der Träger 32 weist eine im Querschnitt annähernd U-förmige Ausgestaltung auf und dient dazu, dem aus einem elastisch verformbaren Werkstoff, beispielsweise TPE, bestehenden Befestigungsabschnitt 22 eine ausreichende Steifigkeit zu verleihen, die eine zuverlässige Befestigung an dem Flansch 14 sicherstellt.

Wie überdies in den Fig. 2 und 3 zu erkennen ist, weist der durch Koextrusion zusammen mit dem Befestigungsabschnitt 22 gefertigte Dichtungsabschnitt 21 Dichtlippen 33 auf, die dichtend an der Fensterscheibe 13 anliegen. Die Dichtlippen 33 sind mit einer Beflockung 34 versehen, welche die beim Verfahren der Fensterscheibe 13 auftretende Reibung vermindert.

An einer Außenfläche der Dichtung 20 ist eine beispielsweise aus Aluminium gefertigte Zierleiste 40 angeordnet. Die Zierleiste 40 weist an einem Ende einen ersten Hakenabschnitt 41 und am anderen Ende einen zweiten Hakenabschnitt 42 auf. Die Hakenabschnitte 41, 42 sind formschlüssig mit dem Befestigungsabschnitt 22 verbunden. Zu diesem Zweck ist der Befestigungsabschnitt 22 mit einem Haltesegment 23 versehen, das von einer ersten Stellung I in eine zweite Stellung II schwenkbar ist, wie die Fig. 2 und 3 zu erkennen geben. Im eingebauten Zustand der Zierleiste 40 rastet der erste Hakenabschnitt 41 an einer ersten Anlagefläche 24 des Befestigungsabschnitts 22 ein, wohingegen der zweite Hakenabschnitt 42 formschlüssig an einer zweiten Anlagefläche 26 des Haltesegments 23 anliegt. Die erste Anlagefläche 24 und die zweite Anlagefläche 26 sind durch Ausnehmungen 27, 28 des Befestigungsabschnitts 22 gebildet. Der Befestigungsabschnitt 22 ist überdies mit einer an das Haltesegment 23 angrenzenden Ausnehmung 25 versehen, die der zweiten Anlagefläche 26 gegenüberliegt und ein Schwenken des Haltesegments 23 von der ersten Stellung I in die zweite Stellung II ermöglicht.

Für die Montage der Zierleiste 40 wird der zweite Hakenabschnitt 42 in die Ausnehmung 28 eingeführt und an die zweite Anlagefläche 26 angelegt. Wie aus Fig. 3 ersichtlich ist, wird das Haltesegment 23 sodann entgegen der Wirkung einer Rückstellkraft von der ersten Stellung I in die zweite Stellung II verschwenkt. Die sich auf diese Weise ergebende Verschiebung der Zierleiste 40 ermöglicht, den ersten Hakenabschnitt 41 in die Ausnehmung 27 einzuführen und an der ersten Anlagefläche 24 anzulegen. Auf Grund der Rückstellkraft kehrt das Haltesegment 23 daraufhin von der zweiten Stellung II in die erste Stellung I zurück mit der Folge, daß die Hakenabschnitte 41, 42 formschlüssig und kraftschlüssig mit den Anlageflächen 24, 26 verbunden sind. Der sich durch die dem Haltesegment 23 immanenten Rückstellkraft ergebende Kraftschluß wird durch eine Spannkraft erhöht, die durch die Zierleiste 40 im Bereich zwischen der ersten Anlagefläche 24 und der zweiten Anlagefläche 26 abstützende Stützlippen 29 erzeugt wird. Die Spannkraft resultiert aus einer beim Einrasten des ersten Hakenabschnitts 41 an der ersten Anlagefläche 24 auftretenden Verformung der Stützlippen 29, wie in Fig. 2 zu erkennen ist. Zu einer zuverlässigen Befestigung der Zierleiste 40 an der Dichtung 20 trägt überdies eine im Bereich der Ausnehmung 27 angeordnete Haltelippe 35 bei, die bei auf den Flansch 14 aufgestecktem Befestigungsabschnitt 22 den ersten Hakenabschnitt 41 teilweise umschließt und so ein Lösen des ersten Hakenabschnitts 41 von der ersten Anlagefläche 24 verhindert. Die Haltelippe 35 verhindert zudem eine Berührung der Zierleiste 40 mit dem Flansch 14 und trägt zu einer optischen Aufwertung des Übergangsbereichs von der Zierleiste 40 auf den Flansch 14 bei. Außerdem gewährleistet die elastisch verformbare Haltelippe 35, daß fertigungsbedingte Toleranzen in dem Übergangsbereich von der Zierleiste 40 auf den Flansch 14 kompensiert werden.

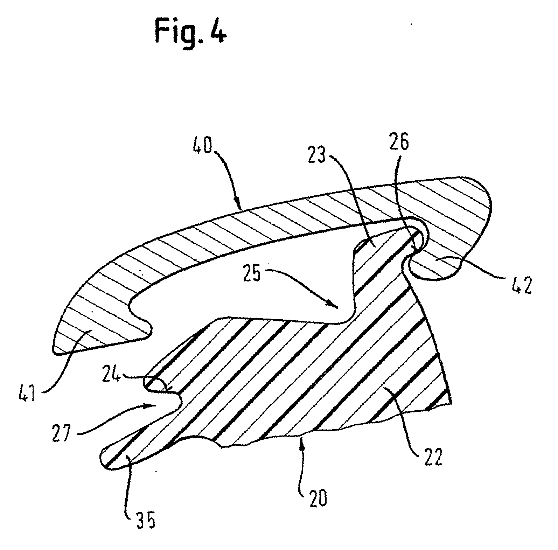

Die in Fig. 4 dargestellte Ausführungsform unterscheidet sich von der zuvor beschrieben Dichtungsanordnung hauptsächlich in der Ausgestaltung des Haltesegments 23, das eine gekrümmt ausgestaltete Anlagefläche 26 aufweist. Die Anlagefläche 26 verhakt sich auf diese Weise mit dem zweiten Hakenabschnitt 42 und trägt somit zu einem wirksamen Formschluß zwischen dem Hakenabschnitt 42 und dem Haltesegment 23 bei.

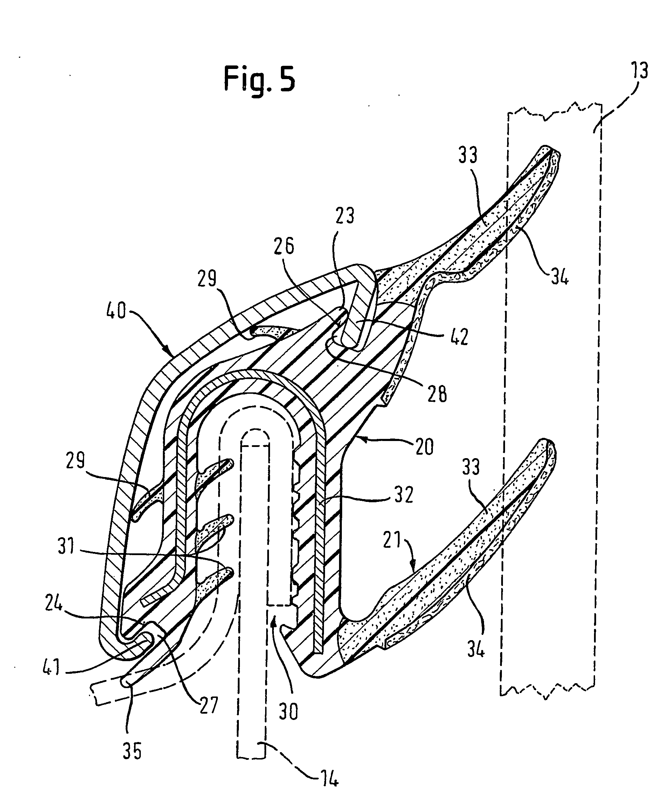

Eine weitere Ausführungsform der Dichtungsanordnung ist in Fig. 5 gezeigt. Das Haltesegment 23 ist in diesem Fall als elastisch verformbare Lippe ausgestaltet, die sich vergleichsweise einfach mit dem zweiten Hakenabschnitt 42 formschlüssig verbinden läßt.

Die zuvor beschriebenen Ausführungsformen zeichnen sich durch eine verhältnismäßig geringe Montagekraft aus, die erforderlich ist, um die Zierleiste 40 an der Dichtung 20 zu befestigen. Grund hierfür ist in erster Linie das Haltesegment 23, das entgegen der Wirkung einer Rückstellkraft von der ersten Stellung I in die zweite Stellung II schwenkbar ist. Das Haltesegment 23 ermöglicht eine formschlüssige und zugleich kraftschlüssige Verbindung von Zierleiste 40 und Befestigungsabschnitt 22, die den Forderungen nach einer relativ großen Abzugskraft und einer fertigungsgerechten Toleranz genügt. Zudem gestatten die Hakenabschnitte 41, 42 eine vergleichsweise flache Ausgestaltung der Zierleiste 40 und damit ein in ästhetischer Hinsicht ansprechendes optisches Erscheinungsbild. Nicht zuletzt trägt zu einem optisch ansprechenden Erscheinungsbild auch die Haltelippe 35 bei, die fertigungsbedingte Toleranzen zwischen der Zierleiste 40 und dem Flansch 14 kompensiert.

### Bezugszeichenliste

- 10: Kraftfahrzeug
- 11: Tür
- 12: Rahmen
- 13: Fensterscheibe
- 14: Flansch

- 20: Dichtung
- 21: Dichtungsabschnitt
- 22: Befestigungsabschnitt
- 23: Haltesegment
- 24: erste Anlagefläche
- 25: Ausnehmung
- 26: zweite Anlagefläche
- 27: Ausnehmung
- 28: Ausnehmung
- 29: Stützlippe
- 30: Ausnehmung
- 31: Haltelippe
- 32: Träger
- 33: Dichtlippe
- 34: Beflockung
- 35: Haltelippe

- 40: Zierleiste
- 41: erster Hakenabschnitt
- 42: zweiter Hakenabschnitt

- I: erste Stellung
- II: zweite Stellung

## Patentansprüche

1. Dichtungsanordnung, insbesondere zum Abdichten von Fensterscheiben (13) eines Kraftfahrzeugs (10), mit einer Dichtung (20), die einen Dichtungsabschnitt (21) und einen Befestigungsabschnitt (22) aufweist, und einer Zierleiste (40), die formschlüssig mit dem Befestigungsabschnitt (22) verbunden ist, wobei der Befestigungsabschnitt (22) ein Haltesegment (23) aufweist, das zum Befestigen der Zierleiste (40) von einer ersten Stellung (I) in eine zweite Stellung (II) schwenkbar ist, **dadurch gekennzeichnet, daß** die Zierleiste (40) an einem Ende mit einem ersten Hakenabschnitt (41) und am anderen Ende mit einem zweiten Hakenabschnitt (42) versehen ist, wobei der zweite Hakenabschnitt (42) formschlüssig an dem Haltesegment (23) anliegt und der erste Hakenabschnitt (41) an einer ersten Anlagefläche (24) des Befestigungsabschnitts (22) einrastet und wobei das Haltesegment (23) zum Einrasten des ersten Hakenabschnitts (41) an der ersten Anlagefläche (24) entgegen der Wirkung einer Rückstellkraft von der ersten Stellung (I) in die zweite Stellung (II) schwenkbar ist.

2. Dichtungsanordnung nach Anspruch 1, **dadurch gekennzeichnet, daß** der Befestigungsabschnitt (22) mit einer an das Haltesegment (23) angrenzenden Ausnehmung (25) versehen ist.

3. Dichtungsanordnung nach Anspruch 2, **dadurch gekennzeichnet, daß** das Haltesegment (23) eine der Ausnehmung (25) gegenüberliegende zweite Anlagefläche (26) für die Zierleiste (40) bildet.

4. Dichtungsanordnung nach Anspruch 3, **dadurch gekennzeichnet, daß** die zweite Anlagefläche (26) gekrümmt ausgestaltet und vorzugsweise durch eine Ausnehmung (28) des Befestigungsabschnitts (22) gebildet ist.

5. Dichtungsanordnung nach einem der Ansprüche 1 bis 4, **dadurch gekennzeichnet, daß** die erste Anlagefläche (24) durch eine Ausnehmung (27) des Befestigungsabschnitts (22) gebildet ist.

6. Dichtungsanordnung nach einem der Ansprüche 1 bis 5, **dadurch gekennzeichnet, daß** der Befestigungsabschnitt (22) mit wenigstens einer Stützlippe (29) versehen ist, welche die Zierleiste (40) abstützt.

7. Dichtungsanordnung nach einem der Ansprüche 1 bis 6, **gekennzeichnet durch** ein Karosserieteil (11), an dem der Befestigungsabschnitt (22) befestigt ist, wobei vorzugsweise der Befestigungsabschnitt (22) im Querschnitt annähernd U-förmig ausgestaltet und auf einen Flansch (14) des Karosserieteils (11) aufgesteckt ist.

8. Dichtungsanordnung nach einem der Ansprüche 1 bis 7, **dadurch gekennzeichnet, daß** der Befestigungsabschnitt (22) durch einen vorzugsweise metallenen Träger (32) armiert ist.

9. Dichtungsanordnung nach einem der Ansprüche 1 bis 8, **dadurch gekennzeichnet, daß** die Zierleiste (40) aus Kunststoff oder Metall, vorzugsweise Aluminium, gefertigt ist.

10. Dichtungsanordnung nach einem der Ansprüche 1 bis 9, **dadurch gekennzeichnet, daß** die Dichtung (20) aus einem elastisch verformbaren Werkstoff, vorzugsweise einem thermoplastischen Elastomer oder Ethylen-Propylen-Dien-Kautschuk, extrudiert ist.

## Claims

1. Sealing arrangement, in particular for sealing window panes (13) of a motor vehicle (10), with a seal (20) comprising a sealing section (21) and a fastening section (22) and a trim strip (40) connected positively to the fastening section (22) wherein the fastening section (22) has a retaining segment (23) movable from a first position (I) to a second position (II) for securing the trim strip (40) **characterised in that** the trim strip (40) is provided at one end with a first hooked section (41) and at the other end with a second hooked section (42), said second hooked section (42) locking positively onto the retaining segment (23) and said first hooked section (41) clipping onto a first contact surface (24) of the fastening section (22) and wherein the retaining segment (23) can be moved from the first position (I) to the second position (II) against a returning force in order to clip the first hooked section (41) onto the first contact surface (24).

2. Sealing arrangement according to claim 1, **characterised in that** the fastening section (22) is provided with a recess (25) adjacent to the retaining segment (23).

3. Sealing arrangement according to claim 2, **characterised in that** the retaining segment (23) provides a second contact surface (26) for the trim strip (40) on the side opposite to the recess (25).

4. Sealing arrangement according to claim 3, **characterised in that** the second contact surface (26) is curved in shape and is preferably formed by a recess (28) in the fastening section (22).

5. Sealing arrangement according to one of the claims 1 to 4, **characterised in that** the first contact surface (24) is formed by a recess (27) in the fastening section (22).

6. Sealing arrangement according to one of the claims 1 to 5, **characterised in that** the fastening section (22) is provided with at least one supporting lip (29) which supports the trim strip (40).

7. Sealing arrangement according to one of the claims 1 to 6, **characterised by** a bodywork part (11) to which the fastening section (22) is secured, said fastening section (22) preferably having an approximately U-shaped cross-section and being mounted on a flange (14) of the bodywork part (11).

8. Sealing arrangement according to one of the claims 1 to 7, **characterised in that** the fastening section (22) is reinforced preferably by a metal bracing element (32).

9. Sealing arrangement according to one of the claims 1 to 8, **characterised in that** the trim strip (40) is made of either plastic or metal, preferably of aluminium.

10. Sealing arrangement according to one of the claims 1 to 9, **characterised in that** the seal (20) is extruded from a mouldable material, preferably a thermoplastic elastomer or ethylene-propylene-dien rubber.

## Revendications

1. Dispositif d'étanchéité, en particulier pour étancher les vitres (13) d'un véhicule automobile (10), comprenant un joint (20), qui présente un tronçon d'étanchéité (21) et un tronçon de fixation (22), et une baguette décorative (40), laquelle est reliée par coopération de formes avec le tronçon de fixation (22), dans lequel le tronçon de fixation (22) comprend un segment de maintien (23) qui, pour fixer la baguette décorative (40), est capable de pivoter depuis une première position (I) jusque dans une deuxième position (II), **caractérisé en ce que** la baguette décorative (40) est dotée d'un premier tronçon en crochet (41) à une extrémité et d'un deuxième tronçon en crochet (42) à l'autre extrémité, ledit second tronçon en crochet (42) s'appliquant par coopération de formes contre le segment de maintien (23), et le premier tronçon en crochet (41) s'enclenchant sur une première surface d'appui (24) du tronçon de fixation (22), et dans lequel le segment de maintien (23), pour l'enclenchement du premier tronçon en crochet (41) sur la première surface d'appui (24), est capable de pivoter depuis la première position (I) jusque dans la deuxième position (II) à l'encontre de l'effet d'une force de rappel.

2. Dispositif d'étanchéité selon la revendication 1, **caractérisé en ce que** le tronçon de fixation (22) est pourvu d'un évidement (25) adjacent au segment de maintien (23).

3. Dispositif d'étanchéité selon la revendication 2, **caractérisé en ce que** le segment de maintien (23) forme une deuxième surface d'appui (26), à l'opposé de l'évidement (25), pour la baguette décorative (40).

4. Dispositif d'étanchéité selon la revendication 3, **caractérisé en ce que** la deuxième surface d'appui (26) est réalisée de façon courbée et est de préférence formée par un évidement (28) du tronçon de fixation (22).

5. Dispositif d'étanchéité selon l'une des revendications 1 à 4, **caractérisé en ce que** la première surface d'appui (24) est formée par un évidement (27) du tronçon de fixation (22).

6. Dispositif d'étanchéité selon l'une des revendications 1 à 5, **caractérisé en ce que** le tronçon de fixation (22) est doté d'au moins une lèvre de soutien (29), qui soutient la baguette décorative (40).

7. Dispositif d'étanchéité selon l'une des revendications 1 à 6, **caractérisé par** une partie de carrosserie (11), sur laquelle le tronçon de fixation (22) est fixé, ledit tronçon de fixation (22) étant de préférence réalisé avec une section transversale approximativement en forme de U et enfiché sur une bride (14) de la partie de carrosserie (11).

8. Dispositif d'étanchéité selon l'une des revendications 1 à 7, **caractérisé en ce que** le tronçon de fixation (22) est armé par un support (32) de préférence métallique.

9. Dispositif d'étanchéité selon l'une des revendications 1 à 8, **caractérisé en ce que** la baguette décorative (40) est fabriquée en matière plastique ou en métal, de préférence en aluminium.

10. Dispositif d'étanchéité selon l'une des revendications 1 à 9, **caractérisé en ce que** le joint (20) est extrudé en un matériau élastiquement déformable, de préférence en un élastomère thermoplastique ou en caoutchouc éthylène-propylène-diène.
